# EUROPEAN PATENT APPLICATION

(11) **EP 4 657 720 A1**
(43) Date of publication of application: **03.12.2025**
(21) Application number: 25179313.9
(22) Date of filing: 28.05.2025
(51) Int. Cl.: H02K 3/04, H02K 3/28, H02K 15/085, H02K 15/106, H02K 1/16, H02K 3/46, H02K 3/18, H02K 15/33, H02K 15/066

(54) **COMPOUND WINDING MOTOR STATOR, METHOD OF MANUFACTURING THE SAME AND MOTOR STRUCTURE**

(30) Priority: 31.05.2024 TW 113120284
(71) Applicant: ATF CO., LTD., Taichung City 428001 (TW)
(72) Inventor: HO, Shih-Chiang, TAICHUNG CITY 428001 (TW)
(74) Representative: Straus, Alexander

(57) **Abstract**

A compound winding motor stator includes a stator core (1) and a coil winding structure (2). The stator core (1) has a yoke (11), and a plurality of winding portions (12) formed toward the center of the yoke (11) in an equally distanced manner. The winding portions (12) are defined as a plurality of first winding portions (121) and a plurality of second winding portions (122). The first winding portions (121) and the second winding portions (122) are arranged in a staggered manner. The coil winding structure (2) has first windings (21) configured as rectangular windings and disposed on the first winding portions (121), and second windings (22) configured as trapezoid windings and disposed on the second winding portions (122). Accordingly, the rectangular windings and the trapezoid windings are arranged in a staggered manner, that improves the slot fill factor of the motor stator, thereby increasing the efficiency of the motor.

## Description

### BACKGROUND OF THE INVENTION

### 1. Field of the Invention

The present invention relates to a motor stator of a motor structure and a method of manufacturing the same, and more particularly to a compound winding motor stator with two winding manners, which uses rectangular and trapezoid winding structures for efficiently using the winding space in the stator core to improve the slot fill factor of the motor stator, so as to improve the efficiency of the motor composed of the stator and a rotor.

### 2. Description of the Related Art

With the advancement of technology, many things in life have become electronic, and the demand for motors is increasing. The principle of motors is to convert electrical energy into kinetic energy to drive other devices to operate. A motor structure is primarily composed of a stator and a rotor. The stator is wound with coils. When being electrified, the stator windings generate a rotating magnetic field, which interacts with the permanent magnet on the rotor, such that the rotor starts to rotate and can output force to the device connected with the motor.

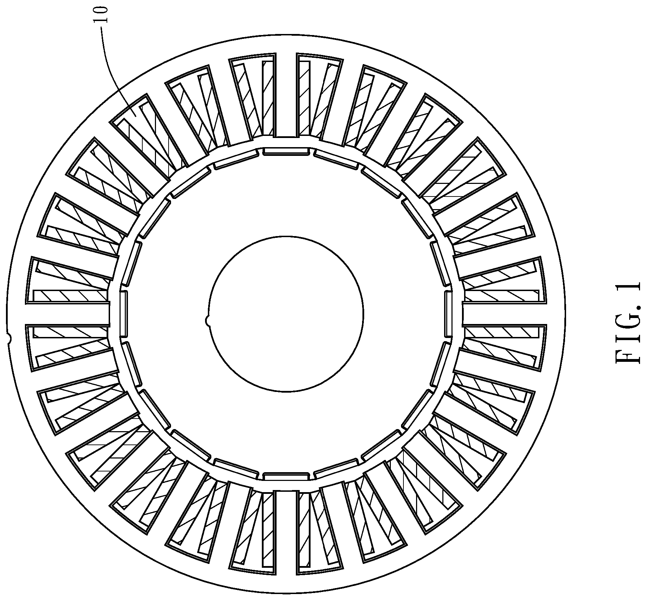

The coil winding manners for motor stators include concentrated winding and distributed winding. The distributed winding includes lap winding, wave winding and concentric winding. Currently, coil winding processes are usually achieved with the assistance of winding machines, but that cannot fully utilize the space of tooth slots of the motor stator with the above-mentioned winding forms. That means relatively higher slot fill factor cannot be achieved, especially with the concentrated winding form. In order to preserve the working area for the winding machine, only rectangular windings are wound on tooth portions of the motor stator, so there is a triangular vacant area 10 in the slot between two tooth portions, as shown in FIG. 1. That has direct influence on the effective conductive area of the motor, so as to affect the output efficiency of the motor. Therefore, motor manufacturers adjust some conditions, such as the wire diameter of the coils, the number of winding turns and the winding arrangement, to improve the slot fill factor.

Taiwan Patent Publication No. I651923 disclosed a motor stator structure, which is an assembled stator structure wherein magnetic poles for being wound with wires are combined with baffles in an assembled manner. The winding process is firstly performed on the magnetic poles, allowing the accommodating space to be evenly filled with the wound coils. After the winding process is accomplished, the baffles are installed to terminal ends of the magnetic poles. In this way, the winding process performed to the stator is prevented from obstruction due to the baffles. In addition, Taiwan Patent Publication No. I722823 disclosed a motor stator wiring structure, which is also an assembled stator structure wherein a plurality of stator components are each provided with a coil set wound on the core, and the stator components are combined into a motor stator. The leads of the coils are guided with three metal plates of a wiring assembly for avoiding the error of direct wiring.

However, for the assembled stator structures, although the winding performed to each stator unit individually can improve the shortcoming of insufficient slot fill factor of the winding directly performed to the complete stator, the assembly structure of the stator itself and the assembly structure between the stator units should be taken into consideration. Since stators are mostly composed of thin metal sheets, it would be quite complicated if additionally designing assembly structure is required. Also, the motor would have too large overall volume due to the installation of multiple assembly components, thereby difficult to be applied in various environments. Therefore, the inventor made effort to think about how to provide a winding technique which can avoid additional assembly components and can improve the slot fill factor.

### SUMMARY OF THE INVENTION

In view of the fact that the above-described existing winding structures of motor stators still have many shortcomings in actual implementation and use, the inventor uses rich professional knowledge and years of practical experience thereof to make an improvement, and creates the present invention accordingly.

It is a primary objective of the present invention to provide a compound winding motor stator which uses two winding forms by making rectangular and trapezoid windings disposed in a staggered manner to fill up the winding space that was not used before, so as to effectively increase the slot fill factor of the motor stator, so that under the same volume, the motor can output relatively larger power.

To attain the above objective, the present invention provides a compound winding motor stator which includes a stator core, and a coil winding structure. The stator core includes a yoke and a plurality of winding portions. The plurality of winding portions are formed on the yoke toward the center of the yoke in an equally distanced manner. The plurality of winding portions are defined as a plurality of first winding portions and a plurality of second winding portions, which are arranged in a staggered manner. The coil winding structure includes a plurality of first windings, and a plurality of second windings electrically connected with the plurality of first windings. The plurality of first windings are configured as rectangle-shaped windings. The plurality of second windings are configured as trapezoid-shaped windings. The first windings are sleeved onto the first winding portions respectively. The second windings are sleeved onto the second winding portions respectively in a way that the relatively narrower end of each of the plurality of second windings is oriented toward the center of the stator core. A plurality of phase output terminals formed by the plurality of first windings and the plurality of second windings are connected in parallel to form a 4Y circuit.

In an embodiment of the present invention, the stator core is composed of a plurality of silicon steel sheets which are stacked and glued to each other.

In an embodiment of the present invention, the stator core further includes a plurality of insulating papers arranged on the yoke and the plurality of winding portions.

In an embodiment of the present invention, the plurality of first windings and the plurality of second windings of the coil winding structure have a plurality of nodes. The nodes are further electrically connected with a circuit board.

In an embodiment of the present invention, the plurality of first windings and the plurality of second windings of the coil winding structure use enameled wires with a wire diameter of 0.85 mm.

It is another objective of the present invention to provide a method of manufacturing the compound winding motor stator. The method includes the steps of: A) performing a pressing process to a plurality of silicon steel sheets; B) stacking and gluing the plurality of silicon steel sheets that have come through the pressing process to form the yoke and the plurality of winding portions for being defined as the plurality of first winding portions and the plurality of second winding portions; C) using a winding machine to wind wires into the plurality of rectangle-shaped first windings and the plurality of trapezoid-shaped second windings respectively; and D) firstly sleeving the second windings onto the second winding portions respectively, then sleeving the first windings onto the first winding portions respectively, electrically connecting the plurality of first windings with the plurality of second windings, and connecting the plurality of phase output terminals formed by the plurality of first windings and the plurality of second windings in parallel to form the 4Y circuit.

In an embodiment of the present invention, in the step B), a plurality of insulating papers are further arranged on the yoke and the plurality of winding portions.

In an embodiment of the present invention, the method may further include a step E) which is electrically connecting a circuit board with a plurality of nodes of the plurality of first windings and the plurality of second windings.

In an embodiment of the present invention, the wires wound into the plurality of first windings and the plurality of second windings are enameled wires with a wire diameter of 0.85 mm.

It is still another objective of the present invention to provide a motor structure having the compound winding motor stator. The motor structure includes a compound winding motor stator, and a rotor disposed in the stator core of the compound winding motor stator, wherein the compound winding motor stator and the rotor are encapsulated in a motor housing.

### BRIEF DESCRIPTION OF THE DRAWINGS

FIG. 1 is a schematic view of a conventional winding manner.
FIG. 2 is a schematic view of a compound winding manner of a preferred embodiment of the present invention.
FIG. 3 is a flow diagram of a method of manufacturing the preferred embodiment of the present invention.
FIG. 4 is a perspective view of the appearance of the preferred embodiment of the present invention.
FIG. 5 is a diagram showing the comparison between the conventional 1Y circuit and the 4Y circuit of the preferred embodiment of the present invention.

### DETAILED DESCRIPTION OF THE INVENTION

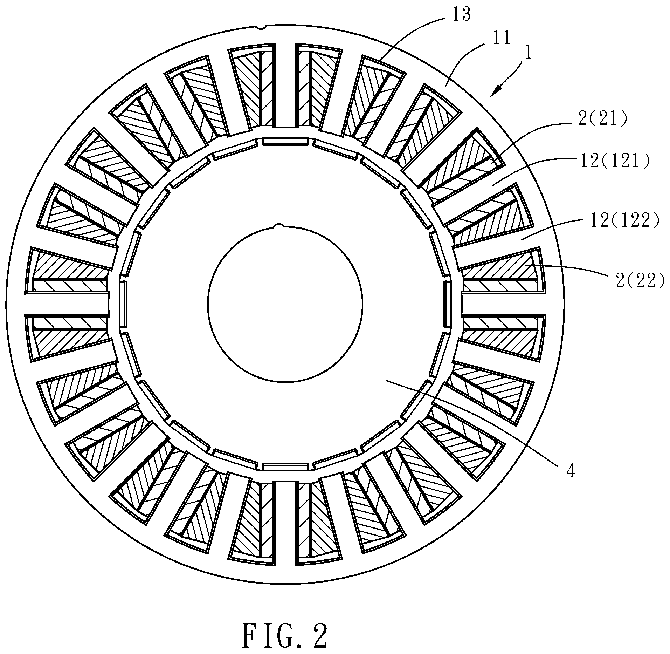

For the detailed description of the technical features of the present invention, a preferred embodiment is described hereinafter in coordination with FIG. 2 to FIG. 4.

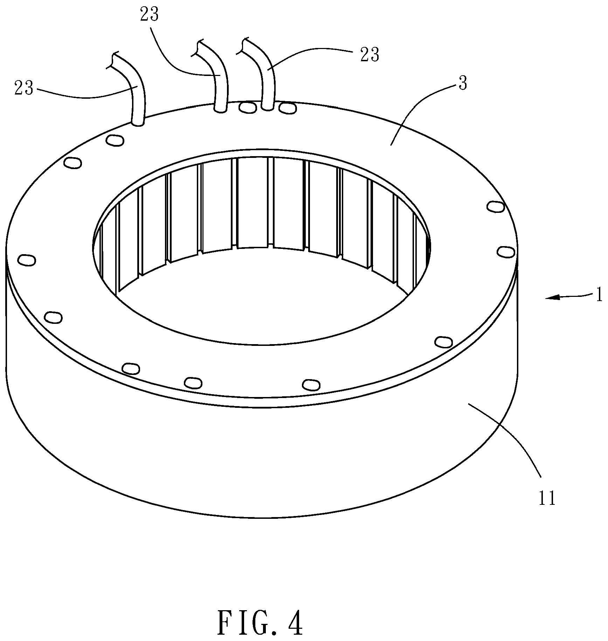

Referring to FIG. 2 and FIG. 4, a compound winding motor stator of the present invention includes a stator core 1 composed of a plurality of silicon steel sheets which are stacked and glued to each other, and a coil winding structure 2. The stator core 1 includes a yoke 11, a plurality of winding portions 12, and a plurality of insulating papers 13 arranged on the yoke 11 and the plurality of winding portions 12. The plurality of winding portions 12 are formed on the inner rim of the yoke 11 toward the center of the yoke 11 in an equally distanced manner. The plurality of winding portions 12 can be defined as a plurality of first winding portions 121 and a plurality of second winding portions 122, which are arranged in a staggered manner. The coil winding structure 2 includes a plurality of first windings 21, and a plurality of second windings 22 electrically connected with the plurality of first windings 21. The first windings 21 and the second windings 22 use enameled wires with a wire diameter of 0.85 mm. The first windings 21 are configured as rectangle-shaped windings. The second windings 22 are configured as trapezoid-shaped windings. The first windings 21 are sleeved onto the first winding portions 121 respectively. The second windings 22 are sleeved onto the second winding portions 122 respectively in a way that the relatively narrower end of each of the second windings 22 is oriented toward the center of the stator core 1. A plurality of phase output terminals 23 formed by all the first windings 21 and second windings 22 are connected in parallel to form a 4Y circuit. A plurality of nodes 24 may be further electrically connected with a circuit board 3.

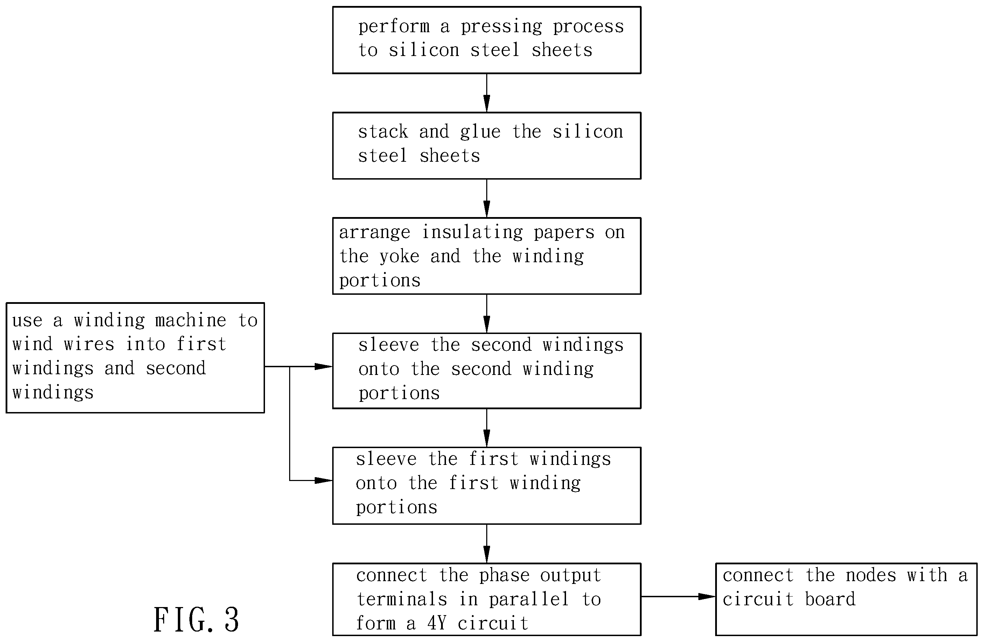

Referring to FIG. 3 at the same time, a method of manufacturing the compound winding motor stator of the present invention includes the steps of: A) performing a pressing process to a plurality of silicon steel sheets; B) stacking and gluing the silicon steel sheets that have come through the pressing process to form the yoke 11 and the plurality of winding portions 12 for being defined as the plurality of first winding portions 121 and the plurality of second winding portions 122, and then arranging a plurality of insulating papers 13 on the yoke 11 and the winding portions 12; C) using a winding machine to wind wires, which are enameled wires with a wire diameter of 0.85 mm, into the plurality of rectangle-shaped first windings 21 and the plurality of trapezoid-shaped second windings 22 respectively; and D) firstly sleeving the second windings 22 onto the second winding portions 122 respectively, then sleeving the first windings 21 onto the first winding portions 121 respectively, electrically connecting all the first windings 21 with the second windings 22, and connecting the plurality of phase output terminals 23 formed by the first windings 21 and the second windings 22 in parallel to form the 4Y circuit. In addition, the method may further include a step E) which is electrically connecting a circuit board 3 with the plurality of nodes 24 of the plurality of first windings 21 and the plurality of second windings 22.

The present invention further provides a motor structure having the compound winding motor stator. The motor structure includes a compound winding motor stator, and a rotor 4 disposed in the stator core 1 of the compound winding motor stator, as shown in FIG. 2. The compound winding motor stator and the rotor 4 will be encapsulated in a motor housing (not shown).

Besides, the practical application scope of the present invention can be further demonstrated by the following specific embodiment, but it is not intended to limit the scope of the present invention in any form.

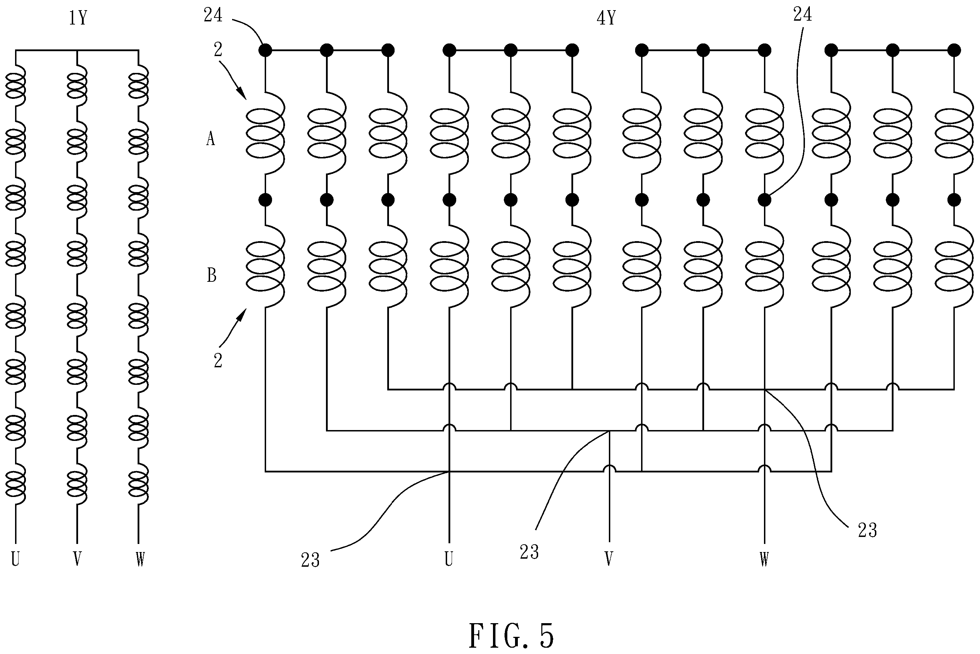

Referring to FIG. 5, the circuit configuration of the conventional stator usually uses 1Y or 2Y circuit. The present invention primarily uses three-phase Y-connection. The three phases include the windings for U-phase, V-phase and W-phase. The U-phase, V-phase and W-phase are connected with each other to become a neutral point. The configuration in the present invention is a 4Y circuit, which means it uses 4 Y-connections connected in parallel. If the configuration uses the traditional 1Y or 2Y circuit, it will result in too few turns in the coil. The fewer turns, the larger the wire diameter. A too large wire diameter will lead to production difficulties in forming the coil and a reduction in slot fill factor. Therefore, the present invention forms the 4Y circuit by parallel connection. In the same winding space, the number of the turns in the coil is 4 times that of the 1Y circuit. In this embodiment, the first windings 21 and the second windings 22 of the coil winding structure 2 are arranged on the A side and the B side in FIG. 5. If the A side is arranged with the rectangular first windings 21, the B side is arranged with the trapezoid second windings 22. If the A side is arranged with the trapezoid second windings 22, the B side is arranged with the rectangular first windings 21. For the coil winding structure 2, the enameled wires with the wire diameter of 0.85 mm are wound into the windings with 56 turns, so that a 36 V stator is configured and it can be applied to a permanent-magnet synchronous motor.

Referring to FIG. 2, the compound winding motor stator of the present invention is primarily composed of the stator core 1 and the coil winding structure 2. The stator core 1 is composed of a plurality of silicon steel sheets which are stacked and then glued. The stator core 1 includes a yoke 11, a plurality of winding portions 12, and a plurality of insulating papers 13 arranged on the yoke 11 and the plurality of winding portions 12. The winding portion 12 extends horizontally toward the center of the yoke 11, and is integrally formed on the yoke 11. The winding portions 12 are divided into a plurality of first winding portions 121 and a plurality of second winding portions 122, which are arranged in a staggered manner. The division is only for disposing different windings in different areas, not meaning that the first winding portion 121 and the second winding portion 122 are different in appearance structure. The coil winding structure 2 includes a plurality of first windings 21 and a plurality of second windings 22. In this embodiment, enameled wires with a wire diameter of 0.85 mm are wound into the first windings 21 and the second windings 22. The first windings 21 are configured as rectangle-shaped windings. The second windings 22 are configured as trapezoid-shaped windings. Each first winding 21 is correspondingly sleeved onto each first winding portion 121. Likewise, each second winding 22 is correspondingly sleeved onto each second winding portion 122. The relatively narrower end of each of the trapezoid second windings 22 is oriented toward the center of the stator core 1. Besides, the U-phase, V-phase and W-phase of the phase output terminals 23 of the first windings 21 and the second windings 22 are connected in parallel to form a 4Y circuit. The nodes 24 of the first windings 21 and the second windings 22 are further electrically connected to a circuit board 3, the appearance of that is as shown in FIG. 4.

Referring to FIG. 3 at the same time, in the method of manufacturing the compound winding motor stator of the present invention, a plurality of silicon steel sheets are firstly taken, and a pressing process is performed to every silicon steel sheet to form it into a hollow ring shape with a plurality of tooth portions oriented toward the center and arranged in an equally distanced manner. Then, the silicon steel sheets after the pressing process are stacked neatly and glued with each other by adhesive, so that a stator core 1 is obtained. By the stacking step, the tooth portions arranged in the equally distanced manner become a plurality of winding portions 12 of the stator core 1. For the convenience of describing the winding portions 12 being correspondingly sleeved with different windings, the winding portions 12 are divided into first winding portions 121 and second winding portions 122, and the first winding portions 121 and the second winding portions 122 are arranged in a staggered manner. After that, an insulating process is performed in a way that a plurality of insulating papers 13 are arranged on the yoke 11 and the plurality of winding portions 12 to enable the stator core 1 composed of silicon steel sheets to be insulated from the coil winding structure 2 going to be installed afterwards, so as to prevent the current of the coil winding structure 2 from directly leaking to the stator core 1.

Furthermore, a coil winding process is performed in a way that enameled wires with a wire diameter of 0.85 mm are wound by a winding machine into a plurality of rectangle-shaped first windings 21 and a plurality of trapezoid-shaped second windings 22. Then, a wire entry process is performed. It should be noticed that the second windings 22 are trapezoid-shaped coils, so the second windings 22 should be firstly sleeved onto the second winding portions 122. After that, the first windings 21 are sleeved onto the first winding portions 121. If the first windings 21 are firstly sleeved onto the first winding portions 121, the wire entry process is difficult to be performed to the second windings 22. After the wire entry process is finished, all the phase output terminals 23 of the first windings 21 and the second windings 22 are divided into U-phase, V-phase and W-phase. The lines of the same phase are connected, so that a 4Y circuit is formed by parallel connection. At last, a circuit board 3 may be electrically connected to a plurality of nodes 24 of the first windings 21 and the second windings 22. The phase output terminals 23 of the U-phase, V-phase and W-phase are directly inserted through the circuit board 3 to be pulled out for use, as shown in FIG. 4 and FIG. 5.

Because the first winding portions 121 and the second winding portions 122 are defined as being arranged in a staggered manner, the rectangle-shaped first windings 21 and the trapezoid-shaped second windings 22 are also arranged on the stator core 1 in a staggered manner, as shown in FIG. 2. In this way, the combination of the first windings 21 and second windings 22 arranged in the staggered manner enables the triangular area between the winding portions 12, that was unable to be filled with the coil before, to be fully filled, so that the slot fill factor of the motor stator is improved.

With the compound winding motor stator of the present invention, a motor structure can be assembled as long as a rotor 4 is disposed in the stator core 1 of the motor stator, as shown in FIG. 2, and then the motor stator and the rotor 4 are installed into a motor housing (not shown). After glue-filling, the encapsulating process is accomplished, and the motor structure can be applied in various environments.

It can be known from the above description of the embodiment that the present invention has the following advantages when compared with the existing technique.
1. For the compound winding motor stator of the present invention, the winding portions thereof are formed on the yoke, which means the present invention doesn't use the assembled stator structure. The stator core only having the normal shape can be used with the coil winding structure of the present invention, so that complex assembly structure can be avoided and the manufacturing cost is lowered. Besides, the rectangle-shaped and trapezoid-shaped windings arranged in a staggered manner improve the slot fill factor of the motor stator. Therefore, under the same volume, the motor can output relatively larger power. The 4Y circuit configuration can be adjusted with suitable turns for the windings and the wire diameter of the enameled wires, so as to raise the slot fill factor.
2. For the method of manufacturing the compound winding motor stator of the present invention, the coil winding structure is finished being wound before being sleeved onto the winding portions, that can prevent the space between the winding portions from disability of being filled with wires due to the working space demand of the winding machine. Besides, in the wire entry process, the trapezoid-shaped windings should be installed before the rectangle-shaped windings are installed, so that two kinds of windings can be completely accommodated in the space between the winding portions.
3. For the motor structure having the compound winding motor stator of the present invention, the compound winding motor stator is combined with a rotor and then encapsulated, so that a motor is obtained and it can be applied to various electrical apparatuses.

In conclusion, the compound winding motor stator, the method of manufacturing the same and the motor structure of the present invention can indeed attain the expected usage effects through the above-disclosed embodiment. However, the above-disclosed figures and description are only the preferred embodiment of the present invention. The manners and constituent elements disclosed in the above embodiment are only taken as examples for illustration, not intended to limit the scope of the present invention. The substitution or variation of other equivalent elements should be included within the scope of the following claims of the present invention.

## Claims

1. A compound winding motor stator, which is **characterized in** comprising:
a stator core (1) comprising a yoke (11) and a plurality of winding portions (12), the plurality of winding portions (12) being formed on the yoke (11) toward a center of the yoke (11) in an equally distanced manner, the plurality of winding portions (12) being defined as a plurality of first winding portions (121) and a plurality of second winding portions (122), which are arranged in a staggered manner; and
a coil winding structure (2) comprising a plurality of first windings (21) and a plurality of second windings (22) electrically connected with the plurality of first windings (21), the plurality of first windings (21) being configured as rectangle-shaped windings, the plurality of second windings (22) being configured as trapezoid-shaped windings, the first windings (21) being sleeved onto the first winding portions (121) respectively, the second windings (22) being sleeved onto the second winding portions (122) respectively in a way that a relatively narrower end of each of the plurality of second windings (22) is oriented toward a center of the stator core (1), the plurality of first windings (21) and the plurality of second windings (22) forming a plurality of phase output terminals (23), the phase output terminals (23) being connected in parallel to form a 4Y circuit.

2. The compound winding motor stator as claimed in claim 1, which is **characterized in that** the stator core (1) is composed of a plurality of silicon steel sheets which are stacked and glued to each other.

3. The compound winding motor stator as claimed in claim 1 or 2, which is **characterized in that** the stator core (1) further comprises a plurality of insulating papers (13) arranged on the yoke (11) and the plurality of winding portions (12).

4. The compound winding motor stator as claimed in anyone of claims 1-3, which is **characterized in that** the plurality of first windings (21) and the plurality of second windings (22) of the coil winding structure (2) have a plurality of nodes (24); the nodes (24) are further electrically connected with a circuit board (3).

5. The compound winding motor stator as claimed in anyone of claims 1-4, which is **characterized in that** the plurality of first windings (21) and the plurality of second windings (22) of the coil winding structure (2) use enameled wires with a wire diameter of 0.85 mm.

6. A method of manufacturing the compound winding motor stator as claimed in claim 1, the method being **characterized in** comprising the steps of:
A) performing a pressing process to a plurality of silicon steel sheets;
B) stacking and gluing the plurality of silicon steel sheets that have come through the pressing process to form the yoke (11) and the plurality of winding portions (12) for being defined as the plurality of first winding portions (121) and the plurality of second winding portions (122);
C) using a winding machine to wind wires into the plurality of rectangle-shaped first windings (21) and the plurality of trapezoid-shaped second windings (22) respectively; and
D) firstly sleeving the second windings (22) onto the second winding portions (122) respectively, then sleeving the first windings (21) onto the first winding portions (121) respectively, electrically connecting the plurality of first windings (21) with the plurality of second windings (22), and connecting the plurality of phase output terminals (23) formed by the plurality of first windings (21) and the plurality of second windings (22) in parallel to form the 4Y circuit.

7. The method as claimed in claim 6, which is **characterized in that** in the step B), a plurality of insulating papers (13) are further arranged on the yoke (11) and the plurality of winding portions (12).

8. The method as claimed in claim 6 or 7, which is **characterized in that** the method further comprises a step E) which is electrically connecting a circuit board (3) to a plurality of nodes (24) of the plurality of first windings (21) and the plurality of second windings (22).

9. The method as claimed in anyone of claims 6-8, which is **characterized in that** the wires used in the step C) are enameled wires with a wire diameter of 0.85 mm.

10. A motor structure, which is **characterized in** comprising the compound winding motor stator as claimed in anyone of claims 1-5, and a rotor (4) disposed in the stator core (1) of the compound winding motor stator, wherein the compound winding motor stator and the rotor (4) are encapsulated in a motor housing.
